Europäisches Patentamt

European Patent Office

Office européen des brevets

(11) Veröffentlichungsnummer : **0 171 097**
**B1**

## (12) EUROPÄISCHE PATENTSCHRIFT

(45) Veröffentlichungstag der Patentschrift :
04.05.88

(21) Anmeldenummer : 85201003.2

(22) Anmeldetag : 25.06.85

(51) Int. Cl.⁴ : **C 21 B 13/08,** F 27 D 17/00,
F 23 G 5/00, B 01 J 8/26,
F 23 C 11/02, F 22 B 31/00

(54) Verfahren zur Erzeugung von Eisenschwamm.

(30) Priorität : 04.08.84 DE 3428782

(43) Veröffentlichungstag der Anmeldung :
12.02.86 Patentblatt 86/07

(45) Bekanntmachung des Hinweises auf die Patenterteilung : 04.05.88 Patentblatt 88/18

(84) Benannte Vertragsstaaten :
DE FR GB IT

(56) Entgegenhaltungen :
EP-A- 0 062 363
DE-A- 2 624 302
DE-A- 3 300 867
DE-A- 3 307 848
US-A- 3 126 277
US-A- 4 253 409
US-A- 4 405 362
US-A- 4 415 357

(73) Patentinhaber : METALLGESELLSCHAFT AG
Reuterweg 14 Postfach 3724
D-6000 Frankfurt/M.1 (DE)

(72) Erfinder : Daradimos, Georg, Dr.
Chemnitzer Strasse 3
D-6365 Rossbach 3 (DE)
Erfinder : Hirsch, Martin
Römerstrasse 7
D-6382 Friedrichsdorf (DE)
Erfinder : Schnabel, Wolfram, Dr.
Thomas-Mann-Strasse 7
D-6270 Idstein (DE)

(74) Vertreter : Rieger, Harald, Dr.
Reuterweg 14
D-6000 Frankfurt am Main (DE)

0 171 097

**Beschreibung**

Die Erfindung betrifft ein Verfahren zur Erzeugung von Eisenschwamm durch Direktreduktion von eisenoxidhaltigen Materialien mittels fester kohlenstoffhaltiger Reduktionsmittel in einem Drehrohrofen, wobei der Austrag des Drehrohrofens in Eisenschwamm und überschüssigen Kohlenstoff enthaltendes Material getrennt wird, das Kohlenstoff enthaltende Material in einem Wirbelschichtreaktor mit zirkulierender Wirbelschicht verbrannt wird, und die erzeugte Verbrennungswärme abgeführt und zur Erzeugung von elektrischer Energie verwendet wird.

Bei der Erzeugung von Eisenschwamm durch Direktreduktion mittels fester kohlenstoffhaltiger Reduktionsmittel im Drehrohrofen kann für die Reduktion nur der $C_{fix}$-Gehalt des Reduktionsmittels genutzt werden. Die brennbaren, flüchtigen Bestandteile des Reduktionsmittels können meistens nur teilweise in der Aufheizzone zur Vorwärmung der Beschickung verbrannt werden. Das Abgas enthält also immer noch brennbare, gasförmige Bestandteile und auch mitgerissene Stäube, die teilweise aus brennbarem Reduktionsmittel bestehen. Der Gehalt des Abgases an brennbaren, flüchtigen Bestandteilen ist insbesondere bei Kohlen mit hohem Anteil an flüchtigen Bestandteilen, wie z. B. Braunkohlen, relativ hoch. Das Abgas muß deshalb einer Nachverbrennung unterworfen werden, wenn neben dem fühlbaren auch der brennbare Wärmeinhalt des Abgases gewonnen werden soll. Zur Vermeidung von Reoxidation des erzeugten Schwammeisens muß im Ofenausträg je nach Reaktivität der als Reduktionsmittel eingesetzten Kohle ein größerer oder kleinerer Überschuß an Kohlenstoff eingestellt werden. Neben diesem Überschuß enthält der Austrag noch die entstandene Asche und den in Form von CaS gebundenen Schwefel, die von Eisenschwamm abgetrennt werden.

Aus der DE-OS 33 00 867 ist es bekannt, das Abgas des Drehrohrofens in einer Nachbrennkammer nachzuverbrennen, die Abgaswärme zur Dampferzeugung zu verwenden und mit dem Dampf elektrische Energie zu erzeugen. Zur Vermeidung von Überhitzungen und Ansatzbildungen muß die Nachverbrennung zur Kontrolle der Temperatur mehrstufig unter Kühlung durch Wassereinspritzung erfolgen. Die Verdampfungswärme kann für die Dampferzeugung nicht genutzt werden. Der Ausbrand des im Abgas enthaltenen feinkörnigen Feststoffs ist dabei unvollständig. Das aus dem Austrag des Drehrohrofens vom Eisenschwamm abgetrennte unmagnetische Material wird in einer zirkulierenden Wirbelschicht verbrannt. Die Verbrennungswärme wird über eine Dampferzeugung zur Erzeugung von elektrischer Erzeugung verwendet. Neben der nur teilweisen Ausnutzung der brennbaren Bestandteile des Abgases in der Nachbrennkammer, erfolgt keine Entfernung des im Abgas enthaltenen umweltschädlichen $SO_2$.

Der Erfindung liegt die Aufgabe zugrunde, alle für die Reduktion im Drehrohrofen nicht nutzbaren überschüssigen Energien optimal auszunutzen und Umweltbelastungen durch z. B. $SO_2$, $NO_x$ und CaS möglich gering zu halten.

Die Lösung dieser Aufgabe erfolgt erfindungsgemäß dadurch, daß das staubhaltige Abgas des Drehrohrofens durch eine Staubkammer in den Wirbelschichtreaktor geleitet und dort nachverbrannt wird, der in der Staubkammer abgeschiedene Staub separat in den Wirbelschichtreaktor geleitet wird, mindestens der überwiegende Teil der gesamten in den Wirbelschichtreaktor eingeführten sauerstoffhaltigen Gase als Fluidisierungsgas in den unteren Bereich des Wirbelschichtreaktor eingeleitet wird, die Verbrennung der brennbaren Bestandteile mit einem überstöchiometrischen Sauerstoffgehalt erfolgt, und die mit den Gasen aus dem Wirbelschichtreaktor ausgetragenen Feststoffe derart in den Wirbelschichtreaktor zurückgeleitet werden, daß der stündliche Feststoffumlauf mindestens das 5-fache des im Wirbelschichtreaktor befindlichen Feststoffgewichts ausmacht.

Das bei der Erfindung angewendete Wirbelschichtprinzip zeichnet sich dadurch aus, daß — im Unterschied zur « klassichen » Wirbelschicht, bei der eine dichte Phase durch einen deutlichen Dichtesprung von dem darüber befindlichen Gasraum getrennt ist — Verteilungszustände ohne definierte Grenzschicht vorliegen. Ein Dichtesprung zwischen dichter Phase und darüber befindlichem Staubraum ist nicht existent ; jedoch nimmt innerhalb des Reaktors die Feststoffkonzentration von unten nach oben ständig ab.

Bei der Definition der Betriebsbedingungen über die Kennzahlen von Froude und Archimedes ergeben sich die Bereiche :

$$0,1 = 3/4 \cdot F_r^2 \cdot \frac{g}{k-g} = 10$$

bzw.

$$0,01 = Ar = 100 \, ,$$

wobei

$$Ar = \frac{d_k^3 \cdot g\,(k-g)}{g \cdot 2} \quad und$$

2

# 0 171 097

$$F_r^2 = \frac{u^2}{g \cdot d_k}$$

sind.

Es bedeuten :
u die relative Gasgeschwindigkeit in m/s
Ar Die Archimedeszahl
$F_r$ Froude-Zahl
g die Dichte des Gases in kg/m$^3$
k die Dichte des Feststoffteilchens in kg/m$^3$
$d_k$ den Durchmesser des kugelförmigen Teilchens in m die kinematische Zähigkeit in m$^2$/s
g die Gravitationskonstante in m/s$^2$.

Verfahren zur Verbrennung von festen, kohlenstoffhaltigen Materialien in einer zirkulierenden Wirbelschicht sind im Prinzip beschrieben in der US-PS 4 165 717 und 4 111 158. Der Wirbelschichtreaktor kann von kreisförmigem oder rechteckigem Querschnitt sein. Der untere Bereich kann auch konisch ausgebildet sein, was insbesondere bei relativ geringen Mengen an sauerstoffhaltigem Fluidisierungsgas vorteilhaft ist. Das staubhaltige Abgas wird bevorzugt oberhalb der Zufuhr des Fluidisierungsgases in einer Höhe bis zu 30 % bezogen auf die gesamte Höhe des Reaktors eingeleitet, wobei die Einleitung in mehreren Ebenen erfolgen kann. Die im Reaktor oberhalb der Sekundärgaszuführung herrschende Gasgeschwindigkeit liegt im Bereich von 4 bis 10 m/sec. Der mittlere Korndurchmesser des Bettmaterials im Reaktor liegt im Bereich von 50 bis 500 um. Die Temperatur im Reaktor wird auf einen Bereich von 800 bis 1 000 °C eingestellt. Als sauerstoffhaltiges Fluidisierungsgas wird im allgemeinen Luft verwendet. Die Zufuhr erfolgt entweder durch den Boden oder im Bereich bis zu 10 % Reaktorhöhe von unten. Wenn die Temperaturkontrolle im Reaktor nur durch entsprechend hohen Luftüberschuß erfolgt, wird die gesamte Verbrennungswärme durch Wärmeaustausch des Abgases in einem Abhitzekessel zur Dampferzeugung ausgenutzt. Eine effektivere Wärmeausnutzung und geringere Anlagen- und Betriebskosten sind möglich, wenn die Verbrennung bei Luftfaktoren von unter etwa 1,8 durchgeführt wird und ein Teil der erzeugten Verbrennungswärme durch im Wirbelschichtreakor befindliche Kühlflächen und/oder durch Umlaufkühlung eines aus dem Reaktor abgezogenen Feststoffstroms in einem Wirbelschichtkühler erfolgt, wobei die Abluft des Wirbelschichtkühlers in den Wirbelschichtreaktor eingeleitet wird. Wenn eine Umlaufkühlung folgt, wird die Abluft aus dem Wirbelschichtkühler nicht in den unteren Bereich des Reaktors eingeleitet, sondern in einen Bereich von etwa 10 % bis zu 30 % der Höhe des Reaktors von unten, wobei jedoch mindestens 60 % der gesamten zugeführten sauerstoffhaltigen Gase in den unteren Bereich eingeleitet werden. Der Drehrohrofen kann im Gegenstrom oder Gleichstrom zwischen fester Beschickung und Gasatmosphäre betrieben werden.

Eine vorzugsweise Ausgestaltung besteht darin, daß die überstöchiometrische Verbrennung mit einem Luftfaktor von 1,2 bis 1,8 erfolgt, ein Feststoffstrom aus dem Wirbelschichtreaktor entnommen, in einem Wirbelschichtkühler indirekt gekühlt und in den Wirbelschichtreaktor zurückgeleitet wird, die erwärmten Fluidisierungsgase des Wirbelschichtkühlers als Sekundärgas in den Wirbelschichtreaktor eingeleitet werden, und/oder Wärme über im Wirbelschichtreaktor angeordnete Kühlflächen abgeführt wird, und das aufgeheizte Kühlmedium zur Erzeugung von elektrischer Energie verwendet wird. In den Bereich von 1,2 bis 1,8, und insbesondere im Bereich von 1,3 bis 1,6, wird einerseits eine sehr gute Oxidation des CaS zu CaSO$_4$ und Bindung von SO$_2$ an CaO zu CaSO$_4$ sowie ein sehr guter Ausbrand aller brennbaren Bestandteile und andererseits eine wirtschaftliche Ausnutzung der Verbrennungswärme erzielt. Die Wärmeabfuhr durch Feststoff-Umlauf-Kühlung wird insbesondere bei problematischen Feststoffen angewendet, da die Gefahr des Kühlflächenverschmutzung im Wirbelschichtkühler geringer ist.

Eine vorzugsweise Ausgestaltung besteht darin, daß das überschüssigen Kohlenstoff enthaltende Material und das staubhaltige Abgas des Drehrohrofens oberhalb der Zufuhr der Fluidisierungsgase in den Wirbelschichtreaktor eingeleitet werden. Dadurch wird einerseits der gasseitige Druckverlust geringer gehalten und andererseits trotzdem eine für einen vollständigen Ausbrand genügende Verweilzeit erzielt.

Eine vorzugsweise Ausgestaltung besteht darin, daß zusätzlich frisches kohlenstoffhaltiges Material in den Wirbelschichtreaktor eingeführt wird. Dadurch kann in einfacher Weise zusätzliche elektrische Energie erzeugt oder Schwankungen ausgeglichen werden.

Eine vorzugsweise Ausgestaltung besteht darin, daß die mittlere Suspensionsdichte im Wirbelschichtreaktor oberhalb der Einleitung des Abgases des Drehrohrofens auf 5 bis 50 kg/m$^3$ eingestellt wird. Bei einer Feststoff-Umlauf-Kühlung in einem Wirbelschichtkühler beträgt die Suspensionsdichte vorzugsweise 5 bis 20 kg/m$^3$, bei einer Kühlung durch im Reaktor befindliche Kühlflächen 15 bis 30 kg/m$^3$ und bei Zugabe von größeren Mengen an Frischkohle im ersten Fall 15 bis 30 kg/m$^3$ und im zweiten Fall 20 bis 50 kg/m$^3$. Bei diesen Werten wird für die jeweiligen Fälle eine sehr gute Temperaturkontrolle im Wirbelschichtreaktor durch entsprechende Wärmeabfuhr erzielt.

Eine vorzugsweise Ausgestaltung besteht darin, daß in der Anlage anfallende Stäube in den Wirbelschichtreaktor geleitet werden. In der Anlage fallen Stäube z. B. bei der Zerkleinerung der Kohle, an Übergabestellen des Transportweges und bei der Raumentstaubung an. Diese Stäube können ohne

3

# 0 171 097

Probleme auf diese Weise beseitigt werden, wobei ein brennbarer Gehalt außerdem ausgenutzt wird.

Eine vorzugsweise Ausgestaltung besteht darin, daß das Abgas des Drehrohrofens vor der Einleitung in den Wirbelschichtreaktor in eine Staubkammer geleitet wird und der dort abgeschiedene Staub separat in den Wirbelschichtreaktor geleitet wird. Die Staubkammer dient als Beruhigungsraum für Druckschwankungen sowohl in der zirkulierenden Wirbelschicht als auch im Drehrohrofen. Der dabei unvermeidlich anfallende Staub wird mit dem abgetrennten Feststoff aus dem Ofenaustrag in den Wirbelschichtreaktor geleitet.

Eine vorzugsweise Ausgestaltung besteht darin, daß ein schwefelbindendes Material in den Wirbelschichtreaktor eingeführt wird. Dieser Zusatz erfolgt, wenn die aus dem Drehrohrofen anfallende Feststoffmenge ein molares Verhältnis von Ca : S von 1,2 bis 1,5 unterschreitet. Auf diese Weise wird mit Sicherheit ein $SO_2$-Gehalt in Abgas des Wirbelschichtreaktors von unter 200 $mg/Nm^3$ erreicht.

Die Erfindung wird anhand einer Figur und eines Beispiels näher erläutert.

In das Beschickungsende des Drehrohrofens 1 wird die Beschickung 2, bestehend aus Erz, Kohle und Zuschlägen chargiert. Der Austrag 3 wird in einer Trennstufe 4 in Eisenschwamm 5 und nichtmagnetisches Material 6 getrennt. Das nichtmagnetische Material 6 enthält den überschüssigen Kohlenstoff, Asche und Entschwefelungsmittel. Das Abgas 7 wird in eine Staubkammer 8 geleitet. In den unteren Bereich des Wirbelschichtreaktors 9 wird Fluidisierungsluft 10 eingeleitet. Das unmagnetische Material 6 wird über Leitung 11 in den unteren Bereich des Wirbelschichtreaktors 9 eingetragen. Das Abgas aus der Staubkammer 8 wird oberhalb der Eintragsstelle der Leitung 11 über Leitung 12 in den Wirbelschichtreaktor 9 eingetragen. Innerhalb des Wirbelschichtreaktors 9 bildet sich eine den gesamten Wirbelschichtreaktor ausfüllende Gas/Feststoff-Suspension aus, die am Kopf des Reaktors über Leitung 13 in einen Rückführzyklon 14 geleitet wird, wo eine Trennung von Gas und Feststoff erfolgt. Der abgeschiedene Feststoff wird über Leitung 15 wieder in den Wirbelschichtreaktor zurückgeführt. Das gereingte Gas wird über Leitung 16 in den Dampferzeuger 17 geleitet, wo es im indirekten Wärmeaustausch mit einem Kühlmedium 18 abgekühlt wird. Der dabei aus dem Kühlmedium erzeugte überhitzte Dampf wird über Leitung 19 in eine Anlage 20 zur Erzeugung von elektrischer Energie geleitet. Die elektrische Energie wird über Leitung 21 an die Verbraucher abgegeben. Das aus dem Dampferzeuger 17 austretende Gas wird über Leitung 22 in einen Zyklonabscheider 23, von dort über Leitung 24 in eine elektrostatische Gasreinigung 25 und von dort über Leitung 26 in die Atmosphäre geleitet. Die im Dampferzeuger 17, Zyklonabscheider 23 und in der elektrostatischen Gasreinigung 25 abgeschiedenen Stäube 27, 28, 29 werden über Leitung 30 in den Wirbelschichtreaktor 9 zurückgeleitet. Aus dem unteren Bereich des Wirbelschichtreaktors 9 wird ein Teil des Feststoffes über Leitung 31 in den Wirbelschichtkühler 32 geleitet und nach einer indirekten Kühlung über Leitung 33 wieder in den Wirbelschichtreaktor 9 zurückgeleitet. Ein Teil des Feststoffes wird über Leitung 34 zur Deponie abgeführt. In den aus zwei Abteilungen bestehenden Wirbelschichtkühler 32 wird von unten Fluidisierungsluft 35 eingeleitet. Die erwärmte Abluft wird oben abgeleitet und über Leitung 36 als Sekundärluft in den Wirbelschichtreaktor 9 eingeleitet. Die Kühlung des Feststoffes im Wirbelschichtkühler 32 erfolgt durch indirekten Wärmeaustausch mit Kondensat 37, das aus der Dampftrommel des Dampferzeugers 17 kommt. Der beim Wärmeaustausch erzeugte Sattdampf wird über Leitung 38 abgeführt und in den Dampferzeuger 17 geleitet. Der in der Staubkammer 8 anfallende Staub wird über Leitung 39 in den Wirbelschichtreaktor 9 gefördert. Über Leitung 40 werden Stäube in den Wirbelschichtreaktor 9 geleitet, die bei der Zerkleinerung der Kohle, an Übergabestellen und bei der Raumentstaubung anfallen. Dabei können auch Stäube zugeführt werden, die bei der Weiterverarbeitung des Eisenschwamms oder in benachbarten Anlagen anfallen. Über Leitung 41 kann Frischkohle in den Wirbelschichtreaktor 9 eingeleitet werden. Im Reaktor 9 können Kühlflächen 42 angeordnet sein, die mit dem Dampferzeuger 17 verbunden sind.

## Ausführungsbeispiel

Der Drehrohrofen wurde mit gebrannten Pellets mit einem Durchmesser von 8 bis 16 mm beschickt. Die Pellets hatten folgende chemische Zusammensetzung (in Gew.%) :

| | |
|---|---|
| $Fe_{total}$ | 67 |
| $Fe^{++}$ | 0,8 |
| CaO | 0,6 |
| MgO | 0,3 |
| $SiO_2$ | 2,0 |
| $Al_2O_3$ | 0,9 |
| Sonstige | 0,5 |

Als Reduktionsmittel wurden Braunkohlebriketts mit einer Feuchtigkeit von 15 % in einer Stückgröße unter 40 mm eingesetzt, die folgende Zusammensetzung hatten (in Gew.%, im Trockenen) :

| | |
|---|---|
| $C_{fix}$ | 44 |
| flüchtige Bestandteile | 51 |
| Asche | 5 |
| S | 0,5 |

4

Die Pellets wurden in einer Menge von 37,05 t/h und die Braunkohle in einer Menge 21,9 t/h in den Drehrohrofen eingesetzt. Die gesamte Beschickung enthielt 4,24 t/h Wasser. Weiterhin wurden 75 000 $Nm^3$/h Luft eingesetzt. Der Austrag betrug 26,35 t/h Eisenschwamm und 1,12 t/h unmagnetisches Material mit 0,24 t/h $C_{fix}$. Die Abgasmenge betrug 101 300 $Nm^3$/h mit 2,02 t/h Staub, der 0,73 t/h $C_{fix}$ enthielt. Das Abgas hatte folgende Zusammensetzung (in Vol.%) :

| | |
|---|---|
| CO | 6,5 |
| $CO_2$ | 18,1 |
| $H_2$ | 3,2 |
| $H_2O$ | 14,8 |
| $N_2$ | 57,4. |

Die Temperatur betrug 850 °C.

In den Wirbelschichtreaktor wurden 34 000 $Nm^3$/h Fluidisierungsluft eingeblasen. 216 t/h Feststoff wurden aus dem Wirbelschichtreaktor in den Wirbelschichtkühler geleitet. Davon wurden 2,2 t/h zur Deponie geführt und der Rest mit 400 °C in den Wirbelschichtreaktor zurückgeführt. In den Wirbelschichtkühler wurden 14 000 $Nm^3$/h Fluidisierungsluft eingeleitet und mit einer Temperatur von 500 °C als Sekundärluft in den Wirbelschichtreaktor geleitet. Als Kühlmedium wurden 67,5 t/h Kondensat aus der Dampftrommel des Dampferzeugers in den Wirbelschichtkühler geleitet und als Sattdampf in den Überhitzer zurückgeleitet. Aus den Abscheidezyklon wurden 144 400 $Nm^3$/h Gas mit einem Staubgehalt von 150 g/$Nm^3$ und mit 850 °C in den Dampferzeuger geleitet. Im nachgeschalteten Abscheidezyklon erfolgte eine Reinigung auf 10 g/$Nm^3$ und in der elektrostatischen Gasreinigung auf etwa 50 mg/$Nm^3$. Der Staubanfall im Dampferzeuger, Zyklon und elektrostatischer Gasreinigung betrug 20,2 t/h und wurde in den Wirbelschichtreaktor zurückgeführt. Im Dampferzeuger wurden 84,2 t/h Dampf mit 100 bar und 500 °C erzeugt. Der damit erzeugte Nettostrom beträgt 25 MW. Das Abgas enthielt unter 200 mg/$Nm^3$ $SO_2$ und unter 200 mg/$Nm^3$ $NO_x$. Der Schwefel wurde praktisch vollständig als $CaSO_4$ im Staub abgeschieden.

Die Vorteile der Erfindung bestehen hauptsächlich darin, daß alle bei der Direktreduktion im Drehrohrofen anfallende Abfallwärme in wirtschaftlicher Weise in einem einzigen Aggregat mit hohem Wirkungsgrad zur Erzeugung von elektrischer Energie nutzbar gemacht wird, alle anfallenden Feststoffe in deponiefähige Form überführt werden, und der Anfall von umweltschädlichen Stoffen, wie $SO_2$ und $NO_x$ im Abgas weitgehend vermieden wird. Weiterhin kann die erzeugte Menge an elektrischer Energie sehr leicht dem effektiven Bedarf angepaßt werden, weil bei einem sinkenden Bedarf festes, kohlenstoffhaltiges Material gelagert werden kann und bei steigendem Bedarf der Vorrat aufgebraucht werden kann oder zusätzlich frische Kohle eingesetzt werden kann. Bei einem Stillstand des Drehrohrofens kann trotzdem der sonstige Bedarf gedeckt werden.

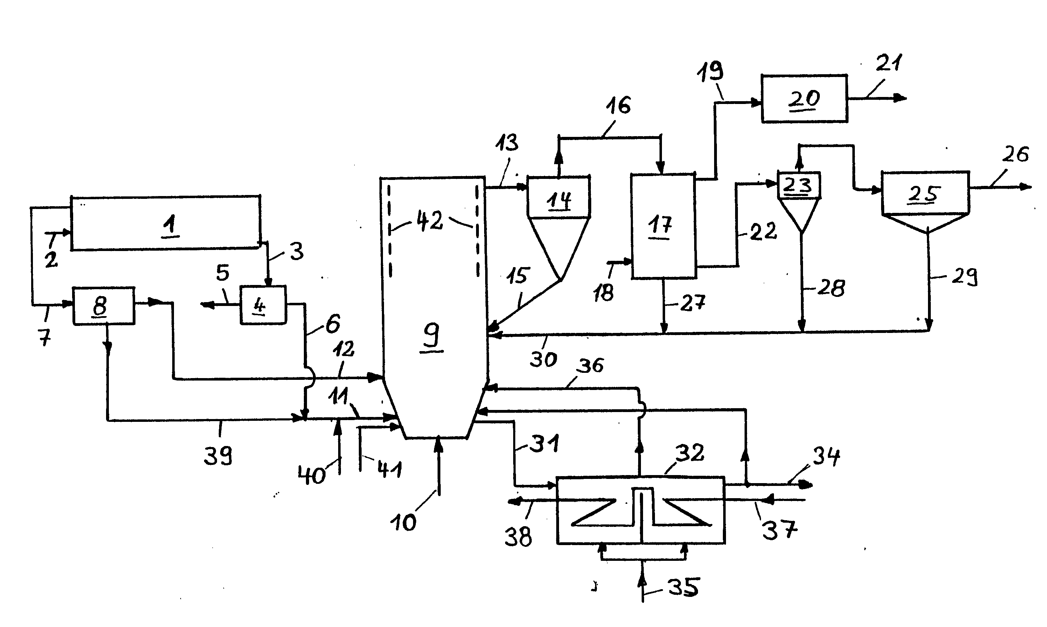

## Patentansprüche

1. Verfahren zur Erzeugung von Eisenschwamm durch Direktreduktion von eisenoxidhaltigen Materialien mittels fester kohlenstoffhaltiger Reduktionsmittel in einem Drehrohrofen, wobei der Austrag des Drehrohrofens in Eisenschwamm und überschüssigen Kohlenstoff enthaltendes Material getrennt wird, das Kohlenstoff enthaltende Material in einem Wirbelschichtreaktor mit zirkulierender Wirbelschicht verbrannt wird, und die erzeugte Verbrennungswärme abgeführt und zur Erzeugung von elektrischer Energie verwendet wird, dadurch gekennzeichnet, daß das staubhaltige Abgas des Drehrohrofens durch eine Staubkammer in den Wirbelschichtreaktor geleitet und dort nachverbrannt wird, der in der Staubkammer abgeschiedene Staub separat in den Wirbelschichtreaktor geleitet wird, mindestens der überwiegende Teil der gesamten in den Wirbelschichtreaktor eingeführten sauerstoffhaltigen Gase als Fluidisierungsgas in den unteren Bereich des Wirbelschichtreaktors eingeleitet wird, die Verbrennung der brennbaren Bestandteile mit einem überstöchiometrischen Sauerstoffgehalt erfolgt, und die mit den Gasen aus dem Wirbelschichtreaktor ausgetragenen Feststoffe derart in den Wirbelschichtreaktor zurückgeleitet werden, daß der stündliche Feststoffumlauf mindestens das 5-fache des im Wirbelschichtreaktor befindlichen Feststoffgewichts ausmacht.

2. Verfahren nach Anspruch 1, dadurch gekennzeichnet, daß die überstöchiometrische Verbrennung mit einem Luftfaktor von 1,2 bis 1,8 erfolgt, ein Feststoffstrom aus dem Wirbelschichtreaktor entnommen, in einem Wirbelschichtkühler indirekt gekühlt und in den Wirbelschichtreaktor zurückgeleitet wird, die erwärmten Fluidisierungsgase des Wirbelschichtkühlers als Sekundärgas in den Wirbelschichtreaktor eingeleitet werden, und/oder Wärme über im Wirbelschichtreaktor angeordnete Kühlflächen abgeführt wird, und das aufgeheizte Kühlmedium zur Erzeugung von elektrischer Energie verwendet wird.

3. Verfahren nach Anspruch 1 oder Anspruch 2, dadurch gekennzeichnet, daß das überschüssigem Kohlenstoff enthaltende Material und das staubhaltige Abgas des Drehrohrofens oberhalb der Zufuhr der Fluidisierungsgase in den Wirbelschichtreaktor eingeleitet werden.

4. Verfahren nach einem der Ansprüche 1 bis 3, dadurch gekennzeichnet, daß zusätzlich frisches kohlenstoffhaltiges Material in den Wirbelschichtreaktor eingeführt wird.

5. Verfahren nach einem der Ansprüche 1 bis 4, dadurch gekennzeichnet, daß die mittlere Suspensionsdichte im Wirbelschichtreaktor oberhalb der Einleitung des Abgases des Drehrohrofens auf 5 bis 50 kg/m³ eingestellt wird.

6. Verfahren nach einem der Ansprüche 1 bis 5, dadurch gekennzeichnet, daß in der Anlage anfallende Stäube in den Wirbelschichtreaktor geleitet werden.

7. Verfahren nach einem der Ansprüche 1 bis 6, dadurch gekennzeichnet, daß ein schwefelbindendes Material in den Wirbelschichtreaktor eingeführt wird.

## Claims

1. Process for the production of sponge iron by direct reduction of iron oxide-containing materials by means of solid carbonaceous reducing agents in a rotary kiln, wherein the material discharged from the rotary kiln is separated into sponge iron and material which contains surplus carbon, the carbon-containing material is burnt in a fluidized bed reactor with a circulating fluidized bed, and the heat generated by the combustion is eliminated and utilized to produce electrical energy, characterized in that the dust-containing exhaust gas from the rotary kiln is carried through a dust chamber to the fluidized bed reactor and is afterburnt therein, the dust separated in the dust chamber is carried separately into the fluidized bed reactor, at least a major part of all oxygen-containing gases supplied to the fluidized bed reactor is introduced as a fluidizing gas to the lower portion of the fluidized bed reactor, the combustion of the combustible constituents is effected with an over-stoichiometric oxygen content, and the solids discharged with the gases out of the fluidized bed reactor are recycled to the fluidized bed reactor in such a manner that the circulation of solids per hour is at least 5 times the weight of the solids contained in the fluidized bed reactor.

2. Process according to Claim 1, characterized in that the over-stoichiometric combustion is effected with an air factor of from 1.2 to 1.8, a stream of solids is withdrawn from the fluidized bed reactor and is indirectly cooled in a fluidized bed cooler and recycled to the fluidized bed reactor, the heated fluidizing gases from the fluidized bed cooler are introduced as a secondary gas to the fluidized bed reactor and/or heat is eliminated via cooling surfaces arranged in the fluidized bed reactor, and the heated cooling medium is used to produce electrical energy.

3. Process according to Claim 1 or Claim 2, characterized in that the material which contains surplus carbon and the dust-containing exhaust gas from the rotary kiln are introduced to the fluidized bed reactor above the inlet for the fluidizing gases.

4. Process according to one of Claims 1 to 3, characterized in that fresh carbonaceous material is additionally introduced into the fluidized bed reactor.

5. Process according to one of Claims 1 to 4, characterized in that the mean density of the suspension in the fluidized bed reactor above the inlet for the exhaust gas from the rotary kiln is adjusted to 5 to 50 kg/m³.

6. Process according to one of Claims 1 to 5, characterized in that dusts which collect in the plant are carried to the fluidized bed reactor.

7. Process according to one of Claims 1 to 6, characterized in that a sulphur-combining material is introduced into the fluidized bed reactor.

## Revendications

1. Procédé de production d'éponge de fer, par réduction directe de matériaux contenant de l'oxyde de fer de moyen d'agent réducteur carboné solide dans un four tubulaire rotatif, en séparant ce qui est soutiré du four tubulaire rotatif en de l'éponge de fer et en du matériau contenant du carbone en excès, le matériau contenant du carbone étant brûlé dans un réacteur à lit fluidisé circulant et la chaleur de combustion produite étant évacuée et utilisée pour produire de l'énergie électrique, caractérisé en ce qu'il consiste à envoyer l'effluent gazeux et contenant de la poussière du four tubulaire rotatif, en passant par une chambre à poussière, dans le réacteur à lit fluidisé où il subit une post-combustion, à envoyer la poussière séparée dans la chambre de poussière séparément dans le réacteur à lit fluidisé, à envoyer au moins la partie prépondérante de tous les gaz contenant de l'oxygène introduits dans le réacteur à lit fluidisé en tant que gaz de fluidisation dans la partie inférieure du réacteur à lit fluidisé, à effectuer la combustion des constituants combustibles par une teneur en oxygène supérieure à la stœchiométrie, et à retourner les matières solides soutirées avec les gaz du réacteur à lit fluidisé au réacteur à lit fluidisé de façon que la circulation horaire de la matière solide représente au moins 5 fois le poids de la matière solide se trouvant dans le réacteur à lit fluidisé.

2. Procédé suivant la revendication 1, caractérisé en ce qu'il consiste à effectuer la combustion hyperstœchiométrique avec un facteur d'air de 1,2 à 1,8, à prélever un courant de matière solide du réacteur à lit fluidisé, à le refroidir indirectement dans un dispositif de refroidissement à lit fluidisé et à le retourner au réacteur à lit fluidisé, à envoyer les gaz de fluidisation chauds du dispositif de refroidissement à lit fluidisé comme gaz secondaire au réacteur à lit fluidisé et/ou à évacuer de la chaleur par des surfaces de refroidissements disposées dans le réacteur à lit fluidisé, et à utiliser le milieu de refroidissement réchauffé pour produire de l'énergie électrique.

3. Procédé suivant la revendication 1 ou la revendication 2, caractérisé en ce qu'il consiste à envoyer le matériau contenant du carbone en excès et l'effluent gazeux du four tubulaire rotatif qui contient de la poussière au-dessus de l'entrée des gaz de fluidisation dans le réacteur à lit fluidisé.

4. Procédé suivant l'une des revendications 1 à 3, caractérisé en ce qu'il consiste à envoyer du matériau carboné frais supplémentaire dans le réacteur à lit fluidisé.

5. Procédé suivant l'une des revendications 1 à 4, caractérisé en ce qu'il consiste à régler la masse volumique moyenne de la suspension dans le réacteur à lit fluidisé au-dessus de l'entrée de l'effluent gazeux du four tubulaire rotatif entre 5 et 50 kg/m$^3$.

6. Procédé suivant l'une des revendications 1 à 5, caractérisé en ce qu'il consiste à envoyer dans le réacteur à lit fluidisé les poussières se produisant dans l'installation.

7. Procédé suivant l'une des revendications 1 à 6, caractérisé en ce qu'il consiste à envoyer un matériau fixant le soufre dans le réacteur à lit fluidisé.

0 171 097